# EUROPEAN PATENT SPECIFICATION

(11) **EP 3 679 464 B1**
(45) Date of publication and mention of the grant of the patent: **17.01.2024**
(21) Application number: 18782831.4
(22) Date of filing: 06.09.2018
(51) Int. Cl.: G06F 3/0488, G08C 17/00, H04M 1/725

(54) **SMALL SCREEN VIRTUAL ROOM-BASED USER INTERFACE**
VIRTUELLE RAUMBASIERTE BENUTZEROBERFLÄCHE MIT KLEINEM BILDSCHIRM
INTERFACE UTILISATEUR BASÉE SUR UNE SALLE VIRTUELLE DE PETIT ÉCRAN

(30) Priority: 06.09.2017 US 201762555038 P
(43) Date of publication of application: 15.07.2020
(73) Proprietor: Savant Systems, Inc., Hyannis, MA 02601 (US)
(72) Inventor: MADONNA, Robert P., Hyannis, Massachusetts 02601 (US); SILVA, Michael C., Hyannis, Massachusetts 02601 (US); CIPOLLO, Nicholas J., Hyannis, Massachusetts 02601 (US); HAMM, Andrew, Hyannis, Massachusetts 02601 (US); LEFTER, Teodor, Hyannis, Massachusetts 02601 (US)
(74) Representative: Meissner Bolte Partnerschaft mbB
(86) International application number: PCT/US2018/049712
(87) International publication number: WO 2019/051060

(56) References cited:
- US-A1- 2007 171 091
- US-A1- 2012 284 672
- US-A1- 2016 120 009

## Description

### RELATED APPLICATIONS

The present application claims the benefit of US 10,802,668 B2, which was filed on September 6, 2017, by Robert P. Madonna et al for SMALL SCREEN VIRTUAL ROOM-BASED USER INTERFACE.

The present application is also related to U.S. Patent Application Serial No. 14/190,984, filed Feb. 26, 2014 by Robert P. Madonna et al., entitled "User Generated Virtual Room-Based User Interface", which is a continuation-in-part of U.S. Patent Application Serial No. 13/551,289, filed July 17, 2012 by Robert P. Madonna et al., entitled "Virtual Room-Based Light Fixture and Device Control," now issued as U.S. Patent No. 9,055,627, which is itself a continuation of U. S. Patent Application Serial No. 12/792,236, filed on June 2, 2010 by Robert P. Madonna et al., and entitled "Virtual Room-Based Light Fixture and Device Control," now issued as U.S. Patent No. 8,296,669, which claims the benefit of U.S. Provisional Patent Application Serial No. 61/183,825, filed June 3, 2009 by Robert P. Madonna et al., entitled "Virtual Room-Based Light Fixture and Device Control."

The present application is also related to U.S. Patent Application Serial 14/733,428, filed on June 8, 2015 by Robert P. Madonna et al., entitled "Generating a Virtual-Room of a Virtual Room-Based User Interface," which is a continuation of U.S. Patent Application Serial No. 13/551,289, filed on July 17, 2012 by Robert P. Madonna et al., and entitled "Virtual Room-Based Light Fixture and Device Control", now issued as U.S. Patent No. 9,055,627, which is a continuation of U.S. Patent Application Serial No. 12/792,236, filed on June 2, 2010 by Robert P. Madonna et al., entitled "Virtual Room-Based Light Fixture and Device Control," now issued as U.S. Patent No. 8,296,669, which claims the benefit of U.S. Provisional Patent Application Serial No. 61/183,825, filed on June 3, 2009 by Robert P. Madonna, and entitled "Virtual Room-Based Light Fixture and Device Control."

### BACKGROUND

### Technical Field

The present disclosure relates generally to device control and more specifically a user interface to control devices in a home automation system.

### Background Information

As homes and other structures become larger, and become filled with more devices, device control becomes an increasing challenge. Traditionally, many devices have been controlled by mechanical switches. While mechanical switches are reliable and cost-effective, they have many limitations, especially when there are many devices located in the same room of a structure. For example, a large room may include a large number of lighting devices, security devices, heating ventilation and air conditioning (HVAC) devices, audio/video (A/V) devices, etc. To control all these devices, a large number of mechanical switches may be needed. As the number of mechanical switches increases within the room, usability decreases. Mechanical switches often are unlabeled, or if labeled, marked with only cryptic descriptions (e.g., "Lamp 1", "Lamp 2", etc.). A user may be forced to memorize which of the many mechanical switches available in the room controls which device. A new guest in the room, who has not memorize this relationship, typically must rely upon trial and error to determine which mechanical switch controls which device, flipping switches until they happen upon the result they desire.

A variety of types of home automation and electronic device control systems have been developed that attempt to improve upon the shortcomings of mechanical switches. Such systems typically include one or more controllers that manage the operation of devices. The controllers may be interacted with via user interface devices, such as dedicated touch screen units, that provide a user interface for controlling the devices. The user interface may include an array of touch-sensitive buttons, where each button controls a device or a group of devices.

However, such button-centric on-screen user interfaces share many of the same shortcomings as mechanical switches. While the buttons are shown on a screen, rather than existing as physical objects like mechanical switches, they operate very similarly. By looking at an on-screen button, it may not be apparent what the button does. While a label may be provided, often such labels are short and cryptic, given the constraints of screen space. A new guest to a room, similar to the case with mechanical switches, may have to touch each on-screen button to discover by trial and error what button achieves what result.

Recently, a device control solution has been developed that addresses many of the shortcomings of mechanical switches and button-centric on-screen user interfaces. This solution provides a user interface that includes one or more virtual rooms displayed on a touch screen. By touching a representation of a device within a virtual room shown on the screen, a user may indicate a state change for the device.

However, while this type of solution solves many of the shortcomings of mechanical switches and button-centric on-screen user interfaces, it presents new challenges. One challenge is how to present such an interface on a "small screen", for example, the screen of a handheld remote control, mobile device, or "small" dedicated touch screen unit (e.g., an in-wall 1-gang touch screen unit, a wall-mounted unit, etc.). When such an interface is shown on a "small screen", individual representations of devices may be exceedingly small. This may hinder users from locating and recognizing representations of devices. Further, even if a user can locate and recognize the tiny representations of devices, they may be unable to touch a specific one without their finger inadvertently overlapping one or more representations of other devices, and potentially causing unwanted state changes. Accordingly, the usability of such interfaces on "small screens" has been limited.

US 2016/0120009 A1 discloses a device comprising a screen for displaying a graphical user interface, wherein the device is configured to control a lightning property of a lightning unit of a plurality of lightning units.

US 2007/0171091 A1 discloses a System for allowing a user, by use of a remote controller, to control the Operation of appliances located in different sub-environments of an environment, that comprises a plurality of sub-environments' recognition means, each one is allocated to a respective sub-environment and equipped with a code unique to the respective sub-environment.

US 2012/0284672 A1 discloses a virtual room-based user interface with one or more virtual rooms. Each virtual room is rendered from one or more images captured of a corresponding physical room of a structure, and includes depictions of one or more light fixtures within the physical room.

Accordingly, there is a need for an improved user interface that may be better suited for use on a "small screen," for example, the screen of a hand held remote control, mobile device or dedicated touch screen unit.

### SUMMARY

The problem is solved by a method for providing a virtual room based user interface according to claim 1 and by a system according to claim 8.

Preferred embodiments are subject matter of the dependent claims.

### BRIEF DESCRIPTION OF THE DRAWINGS

The description below refers to the accompanying drawings, of which:
Fig. 1 is a block diagram of an example architecture of a home automation system operable to control devices in rooms of a structure (e.g., a residential dwelling or commercial building);
Fig. 2 is a view of an example tablet computer showing on a touch screen display thereof an example virtual room of an example "large screen" virtual room-based user interface;
Fig. 3 is a view of an example remote control showing on a touch screen display thereof an example virtual room of an example virtual room-based user interface;
Fig. 4 is an updated view of the example remote control and virtual room of Fig. 3, after a user has provided touch input in the designated control region (e.g., dragged the slider), here to change the state of a lighting service provided by the hanging lamp;
Fig. 5 is an updated view of the example remote control and virtual room of Fig. 3, after a user has selected a successive representation in the sequence, here a representation of table lamps; and
Fig. 6 is a view of an example dedicated touch screen unit (here, a wall-mounted unit) showing on a touch screen display thereof the same example virtual room of a virtual room user interface as shown in Fig. 3.

### DETAILED DESCRIPTION

### Definitions

As used herein, the term "home automation system" should be interpreted broadly to encompass various types of home control, "smart home", and/or device control systems that may control devices (e.g., lighting devices, security devices, A/V devices, HVAC devices, electronic door locks, and/or other types of devices) within a structure, such as a residential dwelling or commercial building. A home automation system may control a variety of different types of devices, or devices of only a particular type (e.g., only lighting devices, only A/V devices, etc.).

As used herein, the term "mobile device" refers to an electronic device that executes a general-purpose operating system and is adapted to be transported on one's person. Devices such as smartphones should be considered mobile devices. Desktop computers, servers, or other primarily-stationary computing devices generally should not be considered mobile devices.

As used herein, the term "remote control" refers to a portable electronic device that includes specially adapted hardware (e.g., specially labeled buttons) for use in controlling a home automation system, or one or more devices of a home automation system. General purpose mobile devices, such as smartphones, should not be considered remote controls.

As used herein, the term "dedicated touch screen unit" refers to an in-wall, wall mounted or table top electronic device that includes specially adapted hardware for use in controlling a home automation system or one or more devices of a home automation system. A dedicated touch screen unit may have a form-factor of limited size, for example, sized to fit in a standard 1-gang switch box, a standard 2-gang switch box, etc.

As use herein, the term "service" refers to an effect or activity offered by a home automation system that involves one or more devices of a home automation system. An example of a service may be lighting service that provides an illumination effect or a cable TV service that provides a cable television viewing activity.

As use herein, the term "physical room" refers to an interior portion of a physical structure or an exterior space associated with a physical structure, in which one or more services may be provided.

As user herein, the term "virtual room" refers to a digital twin of a physical room that is represented by a depiction of an interior portion of a physical structure or an exterior space associated with a physical structure. The depiction may include representations of boundaries of the physical room, representations of furnishings present in the physical room, and representations of devices present in the physical room. The representations of the devices are preferably shown at locations within the virtual room corresponding to the device's actual locations within the physical room.

### An Example Home Automation System

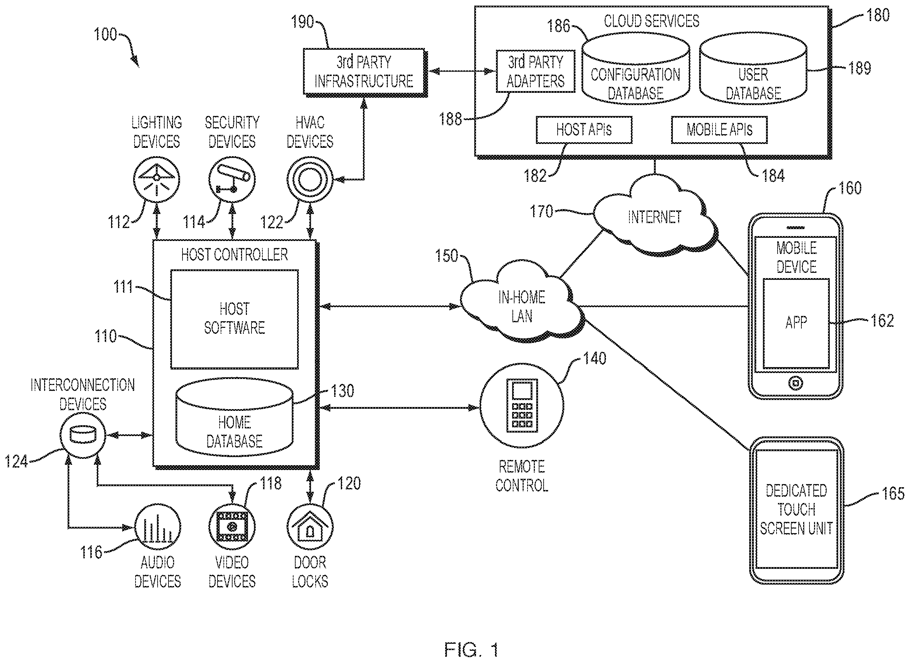

Fig. 1 is a block diagram of an example architecture 100 of a home automation system operable to control devices in rooms of a structure (e.g., a residential dwelling or commercial building). At the core of the system is a host controller 110 coupled to an in-home local area network (LAN) (e.g., a Wi-Fi network) 150. The host controller may include hardware components such as a processor, a memory and a storage device, which collectively store and execute host software 111 configured to monitor the control the operations of devices 112-124, as well as to provide UI interpretation, system administration and monitoring, synchronization with cloud services 180 and mobile devices 160, activity recording, activity prediction and other types of functionality.

The host controller 110 may maintain in its storage device a home database 130 that stores configuration information including information regarding devices controlled by the home automation system and services the home automation system is configured to provide using such devices.

The devices 112-124 of the home automation system may include lighting devices 112, such as light fixtures lamp modules, dimmer modules, and the like; security devices 114, such as home monitors/cameras, motion sensors, home healthcare sensors, related controllers and the like; audio devices 116 and video devices 118 (collectively A/V devices), such as A/V device controllers, media servers, audio amplifiers, cable boxes, and the like; electronic door locks 120 and other types of motor or relay operated devices; HVAC devices 122, such as thermostats; interconnection devices 124, such as IR blasters, matrix switchers, signal extenders and the like, as well as other types of home automation system devices. Each of the devices 112-124 may be associated with (i.e. configured to be used in connection with) a room. The devices 112- 124 may physically reside in the room with which they are associated or reside elsewhere (e.g., a remote equipment rack).

Depending on the implementation, the communications capabilities of the devices 112-124 of the home automation system may vary. For example, at least some of the devices may include both a LAN interface (e.g., a Wi-Fi adaptor) to enable them to communicate with the host controller 110 and other devices via the in-home LAN 150 (e.g., Wi-Fi), or a wireless personal area network (WPAN) interface (e.g., a BLE adaptor) to enable them to communicate with the host controller 110 and other devices via a WLAN (not shown). Likewise, some devices may only have ports or transceivers for wired or point-to-point wireless communication (e.g., RS-232, relay or general-purpose input/output (GPIO) ports, infrared (IR) transceivers, etc.) and communicate with the host controller 110 and other devices using such ports. Some of the devices (e.g., an interconnection device such as an IR blaster) may include both a WPAN interface (e.g., a BLE adaptor) to enable them to communicate with the host controller 110 and a point-to-point wireless transceiver (e.g., an IR transceiver) for communicating with other devices (e.g., A/V devices 116, 118) of the home automation system. Further, some devices may include a LAN interface (e.g., a Wi-Fi interface), but not be configured to communicate with the host controller 110 directly over the in-home LAN 150, but instead communicate via Internet 170, cloud services 180 and third party infrastructure 190. It should be understood that while HVAC devices 122 are shown in Fig. 1 as an example of one type of device that may communicate in this manner, other types of devices 112-124 may alternatively use this method of communication, and vice versa.

A user may control the home automation system using a remote control 140 that communicates with the host controller 110 through the in-home LAN 150 (e.g., via Wi-Fi) or directly with the host controller 110 via point-to-point wireless signals (e.g. via IR or radio frequency RF signals). The remote control 140 may include a small touch screen display (e.g., less than 7 inches on diagonal, for example 2.95 inches on diagonal), physical buttons, and a processor, memory and storage device that store and execute control software configured to interface with the host controller 110 and cloud services 180. The control software is configured to present a virtual-room based user interface for controlling the home automation system, among other functionality.

A user may also control the home automation system using a mobile device 160 that communicates with the host controller 110 via the in-home LAN 150 or using a mobile data connection to the Internet 170. The mobile device 160 may include a small touch screen display (e.g., less than 7 inches on diagonal, for example 5.5 inches on diagonal), and a processor, a memory and a storage device that store and execute an application (app) 162 (e.g., a mobile app) configured to interface with the host controller 110 and/or cloud services 180, that is configured to present a virtual-room based user interface for controlling the home automation system, among other functionality.

Still further, a user may control the home automation system using a dedicated touch screen unit 165 (e.g., an in-wall 1-gang touch screen unit, a wall mounted unit, etc.) that communicates with the host controller 110 via the in-home LAN 150. The dedicated touch screen unit 165 may include a small touch screen display, and a processor, a memory and a storage device that store and execute software configured to interface with the host controller 110 and/or cloud services 180, that may present a virtual-room based user interface for controlling the home automation system, among other functionality.

Devices may communicate via the Internet 170 with cloud services 180 and its host application program interfaces (APIs) 182 and mobile APIs 184. The cloud services 180 may provide remote access to home automation control, a persistent backup of the home database 130 (storing data in a configuration database 186), interfaces to third party infrastructure (via third party adaptors 188), user profiles and usage tracking (storing data in user database 189), a mechanism for over-the-air updates, host crash reporting, and license management, among other functions.

### A Virtual Room Based User Interface Generally

The software on the remote control 140, the app 162 on the mobile device 160 or the software on the dedicated touch screen unit 165 is configured to present a virtual room-based user interface for controlling the home automation system 100, which includes one or more virtual rooms that each show a photo-realistic depiction of a corresponding physical room of the structure. The photo-realistic depiction may show photo-realistic representations of boundaries of the physical room (e.g., the walls, ceiling, floor, etc.), photo-realistic representations of furnishings present in the physical room (e.g., sofas, chairs, beds, wall-hangings, etc.), and photo-realistic representations of devices present in the physical room (e.g., lighting devices, security devices, A/V devices, HVAC devices and/or other types of devices). The representations of the devices are preferably shown at locations within the virtual room corresponding to the device's actual locations within the physical room. The virtual room operates as an interface environment. By interacting with the virtual room, a user may indicate changes to the state of services provided by the corresponding devices in the physical room. As the state of devices is changed so they provide different services within the physical room, the appearance of the virtual room is dynamically updated to reflect the changes. Such update is configured to change the appearance of the representations of devices, as well as the appearance of the representations of boundaries and the appearance of the representations of furnishings (e.g., with photo-realistic changes to shadows, reflections, etc.). In such manner, the virtual room is updated to reflect back to the user a photo-realistic depiction of the present condition of the corresponding physical room, such that what a user views within the virtual room will mirror, or at least resemble, their experience within the corresponding physical room. Such an interface may be highly intuitive, allowing a user to readily indicate control selections without having to understand complicated control schemes.

### Operation of a Traditional "Large Screen" Virtual Room Based User Interface

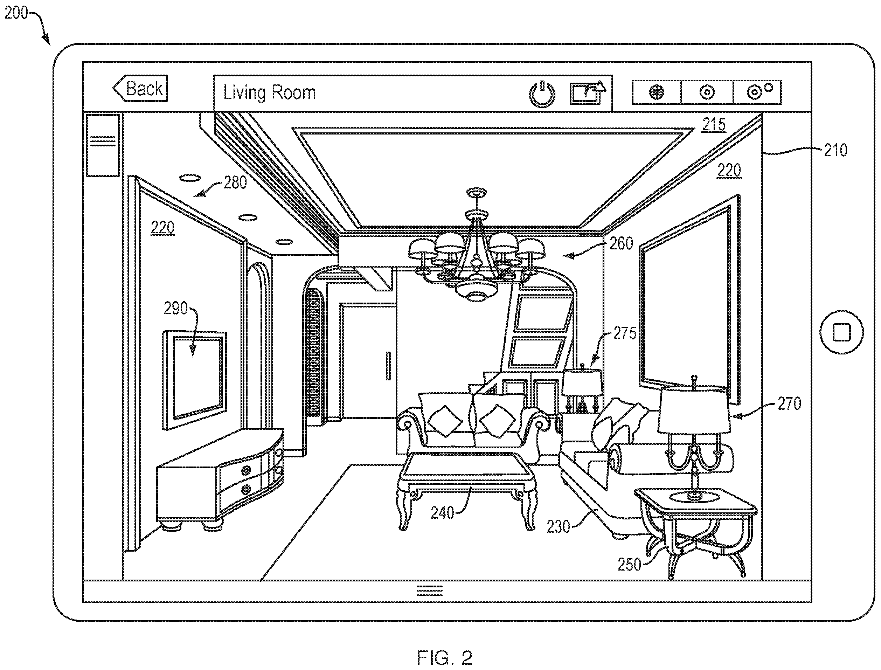

In a traditional virtual room based user interface adapted for use on a "large screen" (e.g., greater than 7 inches on diagonal), a user may indicate a change to the state of a service provided by a device in the physical room by touching upon the representation of the device in the physical room. For example, the user may touch a representation of a lighting device to activate the lighting device, changing the state of a lighting service. Fig. 2 is a view 200 of an example tablet computer showing on a touch screen display thereof an example virtual room 210 of an example "large screen" virtual room-based user interface. The example virtual room 210 corresponds to a living room within an example home. However, it should be understood that such choice of room for this example is arbitrary. The example virtual room 210 includes photo-realistic representations of boundaries of the physical room, such as the ceiling 215 and walls 220; photo-realistic representations of furnishings present in the physical room, such as a sofa 230, coffee table 240, and end table 250; as well as photo-realistic representations of controllable devices within the physical room, such as a chandelier 260, table lamps 270, 275, recessed cans 280, and a television 290. Each of these devices provides a service having states (e.g., an active state, an inactive state, and some cases a plurality of active sub-states). For example, the chandelier, table lamps, and recessed cans provide a lighting service that includes an active state of "on" (and potentially a plurality of active sub-states representing different illumination levels and/or illumination colors), and an inactive state of "off". Similarly, the television provides a viewing service that includes an active state of "on" (and potentially a plurality of active sub-states representing different video sources, channels, volume levels, etc. being displayed/used), and an inactive state of the television being "off'.

By touching the photo-realistic representation of the devices 260-290 within the virtual room 210, a user indicates changes to the state of the services provided by the corresponding devices in the corresponding physical room, that are implemented by the home automation system. For example, by touching the photo-realistic depiction of the chandelier 260, the user may cause the chandelier within the physical room to be illuminated (or otherwise controlled). Similarly, by touching the photo-realistic depiction of the television 290, the user may cause the television within the physical room to be powered on (or otherwise controlled).

As the devices provide different services, the appearance of the virtual room 210 is dynamically updated to reflect the changes. For example, when the chandelier is turned on, the photo-realistic representation of the chandelier 260 within the virtual room 210 is changed to represent the chandelier in an illuminated state. Such change may be accompanied by changes to the representations of boundaries and furnishings, to show shadows, reflections and other effects of the illumination from the chandelier. Similarly, when the television is powered on, the photo-realistic depiction of the television 290 within the virtual room 210 is changed to depict the television in a powered on state. Such change is accompanied by changes to the representations of boundaries and furnishings, to show reflections and other effects of the television screen emitting light. In this manner, the virtual room 210 may mirror, or at least resemble, the present appearance of the physical room.

While such an arrangement may work well on a "large screen", as discussed above, when the screen size is decreased it may be difficult for a user to recognize representations of devices that may be touched. For example, referring to Fig. 2, the representation of lamp 275 may become so small that it is not even noticeable in the interface. Further, even if a user can locate tiny representations of devices in the interface, they may be unable to touch a specific one without their finger inadvertently toughing another. For example, the representation of lamp 270 and the representation of lamp 275 may be so close together that a user's finger covers at least a portion of both, such that a desired one cannot be reliably selected.

### Operation of a "Small Screen" Virtual Room Based User Interface

In a virtual room based user interface adapted for use on a "small screen" (e.g., less than 7 inches), photo-realistic representations of devices are organized into a sequence (e.g., a sequential loop). A particular photo-realistic representation of a device from the sequence is selected by default when the virtual room is first displayed. The interface is configured to show an indication of the device corresponding to the selected photo-realistic representation (e.g., a text label) and provide a control region for changing a state of a service provided by the device. The control region may take the form of a slider, button or other element separate from the selected photo-realistic representation (e.g., at the bottom of the user interface). In response to user input (e.g., touch) in the designated control region, the home automation system 100 (or more specifically, the host controller 110 thereof) changes the state of the service provided by the device in the physical room. The appearance of the virtual room is dynamically updated to reflect the change. Such updating may change the appearance of the selected photo-realistic representation of a device to indicate the changed state of the service, as well as change the appearance of the representations of boundaries and the appearance of the representations of furnishings (e.g., with photo-realistic changes to shadows, reflections, etc.).

In response to further user input in the interface (e.g., a touch gesture, such as a forward swipe gesture), a successive photo-realistic representation in the sequence may be selected. The indication of the device is updated to reflect the newly selected photo-realistic representation (e.g., the text label is updated). A new device in the physical room then becomes the subject of control in the virtual room based user interface. In response to user input (e.g., touch) in the designated control region, the home automation system 100 (or more specifically, the host controller 110 thereof) changes the state of the service provided by the new device in the physical room. Again, the appearance of the virtual room is dynamically updated to reflect the change. Such updating may change the appearance of the newly selected photo-realistic representation to indicate the changed state of the service, as well as change the appearance of the representations of boundaries and the appearance of the representations of furnishings (e.g., with photo-realistic changes to shadows, reflections, etc.). A user may advance further through the sequence of photo-realistic representations of devices (in some cases eventually looping back to the beginning) by entering further input in the interface (e.g., a further forward swipe gesture), or may move back in the sequence of photo-realistic representations of devices by entering input in the interface (e.g., a backward swipe gesture). Since device selection does not rely on touching individual representations of devices in the virtual room, the interface may be better adapted for display on a "small screen."

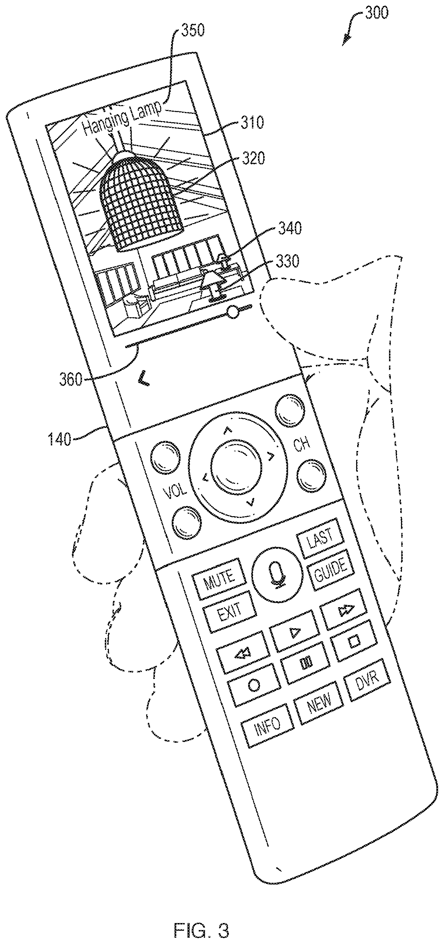

Fig. 3 is a view 300 of an example remote control 140 showing on a touch screen display thereof an example virtual room 310 of an example virtual room-based user interface. The example virtual room 310 corresponds to a great room within an example home. However, it should be understood that such choice of room for this example is arbitrary. The example virtual room 310 includes photo-realistic representations of boundaries of the physical room, photo-realistic representations of furnishings present in the physical room, as well as photo-realistic representations of controllable devices within the physical room, such as a hanging lamp 320 and table lamps 330, 340. Each of these devices provides a service having states (e.g., an active state, an inactive state, and some cases a plurality of active sub-states), similar to as described above.

Initially when the virtual room is loaded (e.g., by default), the representation of the hanging lamp 320 is selected from a sequence of representations of devices. An indication (e.g., a text label) 350 is shown that the hanging lamp 320 is selected. Also shown is a designated control region (e.g., slider) 360 that is separate from the representation of the hanging lamp 320. A user may provide touch input in the designated control region 360 (e.g., drag the slider) to change the state of a lighting service provided by the hanging lamp.

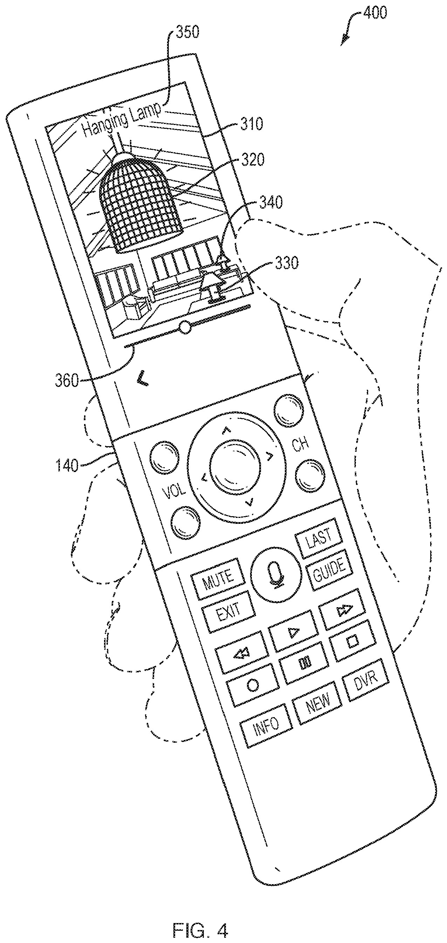

Fig. 4 is an updated view 400 of the example remote control 140 and virtual room 310 of Fig. 3, after a user has provided touch input in the designated control region (e.g., dragged the slider), here to change the state of a lighting service provided by the hanging lamp. As can be seen, the appearance of the virtual room is dynamically updated to show the representation of the hanging lamp 320 providing less illumination, and the effects of such decreased illumination is shown on the representations of boundaries and the representations of furnishings. After the lighting service provided by the hanging lamp has been adjusted, the user may advance with touch input (e.g., a forward swipe) to select a successive representation in the sequence, here the representation of table lamps 330, 340.

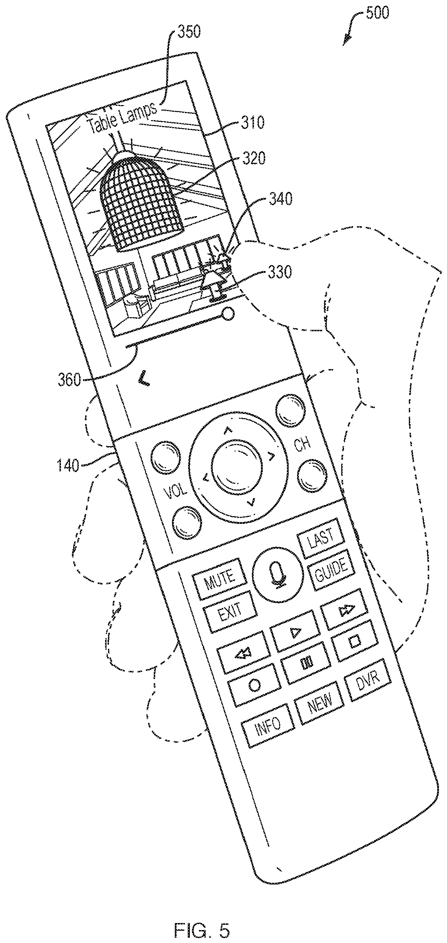

Fig. 5 is an updated view 500 of the example remote control 140 and virtual room 310 of Fig. 3, after a user has selected a successive representation in the sequence, here the representation of table lamps 330, 340. Again, using the designated control region (e.g., slider) 360 that is separate from the representation of table lamps 330, 340, the user may change the state of a lighting service, and the appearance of the virtual room is dynamically updated.

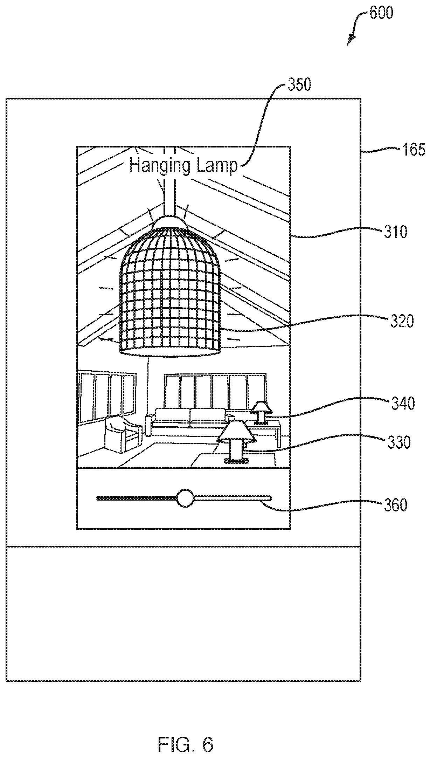

Fig. 6 is a view 600 of an example dedicated touch screen unit (here, a wall-mounted unit) showing on a touch screen display thereof the same example virtual room 310 of a virtual room user interface as shown in Fig. 3. The example virtual room 310 on the dedicated touch screen unit may be used to control devices in the physical room, as described above.

In summary, a virtual room-based user interface suited for use on a "small screen" is provided that organizes representations of devices in a virtual room into a sequence, allows a user to cycle through the representations of devices in the sequence so only a single one is selected at any given time, and individually control the device corresponding to a selected representation using a designated control region separate from the selected representation of the device. While the above description provides certain specific examples, it should be apparent that a number of modifications and/or additions may be made thereto. Additionally, it should be understood that the steps described above may be implemented in hardware, software (embodied as a non-transitory electronic device-readable medium including software), firmware, or a combination thereof. A non-transitory electronic device-readable medium may take the form of a memory, such as a Random Access Memory (RAM), a disk, such as a hard drive or flash device, or other tangible storage medium. In general, it should be understood that the above descriptions are meant to be taken only by way of example.

## Claims

1. A method for providing a virtual room-based user interface to control a plurality of devices in a home automation system, comprising:
selecting a representation of a first device from a sequence of representations of devices, the representations of devices each corresponding to a respective device of the plurality of devices present in a physical room that provide services, wherein the selecting the representation of the first device is a default selection;
displaying, on a touch screen display of a remote control (140), mobile device (160) or dedicated touch screen unit (165),
a virtual room (310) that corresponds to the physical room that includes the representations of each of the plurality of devices, representations of boundaries of the physical room, and representations of furnishings present in the physical room,
an indication of the selected representation of the first device;
a designated control region (360) separate from the selected representation of the first device;
receiving user input in the designated control region (360) indicating a change of state;
in response to the user input in the designated control region (360),
causing a change of a state of a service provided by the first device, and
dynamically updating appearance of the virtual room (310) to change appearance of the selected representation of the first device, appearance of the representations of boundaries and appearance of the representations of furnishings, to reflect the changed state of the service provided by the first device;
selecting a successive representation in the sequence, the successive representation corresponding to a second device of the plurality of devices, wherein the selecting the successive representation is in response to additional user input;
updating the indication of the selected representation to indicate the representation of the second device;
receiving further user input in the designated control region (360) indicating a further change of state;
in response to the further user input in the designated control region (360),
causing a change to a state of a service provided by the second device, and
dynamically updating appearance of the virtual room (310) to change appearance of the representation of the second device, appearance of the representations of boundaries and appearance of the representations of furnishings, to reflect the changed state of the service provided by the second device.

2. The method of claim 1, wherein the additional user input is a forward swipe gesture.

3. The method of claim 1, further comprising:
selecting a previous representation in the sequence, the previous representation corresponding to the first device of the plurality of devices present in the physical room, wherein the selecting the previous representation is in response to yet more additional user input;
updating the indication of the selected representation to again indicate the representation of the first device;
receiving still further user input in the designated control region (360) indicating a still further change of state; and
in response to the still further user input in the designated control region (360),
causing a further change to the state of the service provided by the first device, and
dynamically updating appearance of the virtual room (310) to change appearance of the representation of the first device, appearance of the representations of boundaries and appearance of the representations of furnishings, to reflect the changed state of the service provided by the first device.

4. The method of claim 3, wherein the yet more additional user input is a backwards swipe gesture.

5. The method of claim 1, wherein the first device is a lighting device, the service provided by the first device is a lighting service, and the changed state of the service is a change to an illumination level.

6. The method of claim 1, wherein the first device is an audio/video (A/V) device, the service provided by the first device is a viewing service, and the changed state of the service is a change to at least one of a video source, channel or volume level.

7. The method of claim 1, wherein the representations of devices, representations of boundaries of the physical room, and representations of furnishings present in the physical room are each photo-realistic representations.

8. A home automation system having a virtual room-based user interface to control a plurality of devices, comprising:
an electronic device including a touch screen display and configured to select a representation of a first device from a sequence of representations of devices, the representations of devices each corresponding to a respective device of the plurality of devices present in a physical room that provide services, wherein the selection of the representation of the first device is a default selection, and display a virtual room (310) on the touch screen display that corresponds to the physical room that includes the representations of each of the plurality of devices, representations of boundaries of the physical room, and representations of furnishings present in the physical room, and receive user input in a designated control region (360) on the touch screen display separate from the selected representation of the first device; and
a controller in communication with the electronic device and operable to control devices of the home automation system, the controller configured to, in response to the user input in the designated control region (360), change a state of a service provided by the first device,
wherein the electronic device is further configured to dynamically update appearance of the virtual room (310) to change appearance of the selected representation of the first device, appearance of the representations of boundaries and appearance of the representations of furnishings to reflect the changed state of the service provided by the first device,
wherein the electronic device is further configured to select a successive representation in the sequence in response to additional user input, the successive representation corresponding to a second device of the plurality of devices, and to receive further user input in the designated control region (360) indicating a further change of state,
wherein the controller is further configured to, in response to the further user input in the designated control region (360), change a state of a service provided by the second device, and
wherein the electronic device is further configured to dynamically update appearance of the virtual room (310) to change appearance of the representation of the second device, appearance of the representations of boundaries and appearance of the representations of furnishings to reflect the changed state of the service provided by the second device.

9. The home automation system of claim 8, wherein the first device is a lighting device, the service provided by the first device is a lighting service, and the changed state of the service is a change to an illumination level.

10. The home automation system of claim 8, wherein the first device is an audio/video (A/V) device, the service provided by the first device is a viewing service, and the changed state of the service is a change to at least one of a video source, channel or volume level.

## Patentansprüche

1. Verfahren zur Bereitstellung einer virtuellen raumbasierten Benutzeroberfläche zum Steuern einer Vielzahl von Geräten in einem Hausautomationssystem, umfassend:
Auswählen einer Darstellung eines ersten Gerätes aus einer Darstellungsfolge von Geräten, wobei die Gerätedarstellungen jeweils einem betreffenden Gerät der Vielzahl von in einem physikalischen Raum vorhandenen Geräten entsprechen, die Bedienungen anbieten, wobei das Auswählen der Darstellung des ersten Gerätes eine Standardauswahl ist;
Darstellen, auf einer Berührungsbildschirmanzeige einer Fernbedienung (140), einem Mobilgerät (160) oder einer zugehörigen Berührungsbildschirmeinheit (165),
eines virtuellen Raums (310), der dem physikalischen Raum entspricht, der die Darstellungen jedes der Vielzahl von Geräten, Darstellungen von Begrenzungen des physikalischen Raums und Darstellungen von in dem physikalischen Raum vorhandenen Einrichtungen enthält,
einer Angabe der ausgewählten Darstellung des ersten Gerätes;
eines von der ausgewählten Darstellung des ersten Gerätes getrennten, bezeichneten Steuerungsbereichs (360);
Empfangen einer Benutzereingabe im bezeichneten Steuerungsbereich (360), die eine Zustandsänderung anzeigt;
als Reaktion auf die Benutzereingabe im bezeichneten Steuerungsbereich (360),
Bewirken einer Änderung eines Zustands einer durch das erste Gerät angebotenen Bedienung, und
dynamisches Aktualisieren eines Erscheinungsbildes des virtuellen Raums (310) zum Ändern eines Erscheinungsbildes der ausgewählten Darstellung des ersten Gerätes, Erscheinungsbildes der Darstellungen von Begrenzungen und Erscheinungsbildes der Darstellungen von Einrichtungen, um den geänderten Zustand der durch das erste Gerät angebotenen Bedienung widerzuspiegeln:
Auswählen einer nachfolgenden Darstellung in der Reihenfolge, die nachfolgende Darstellung einem zweiten Gerät der Vielzahl von Geräten entspricht, wobei das Auswählen der nachfolgenden Darstellung als Reaktion auf eine zusätzliche Benutzereingabe stattfindet;
Aktualisieren der Angabe der ausgewählten Darstellung, um die Darstellung des zweiten Gerätes anzuzeigen;
Empfangen einer weiteren Benutzereingabe in dem eine weitere Zustandsänderung anzeigenden, bezeichneten Steuerungsbereich (360);
als Reaktion auf die weitere Benutzereingabe im bezeichneten Steuerungsbereich (360)
Bewirken einer Änderung an einem Zustand einer durch das zweite Gerät angebotenen Bedienung, und
dynamisches Aktualisieren eines Erscheinungsbildes des virtuellen Raums (310) zum Ändern eines Erscheinungsbildes der Darstellung des zweiten Gerätes, eines Erscheinungsbildes der Darstellungen von Begrenzungen und eines Erscheinungsbildes der Darstellungen von Einrichtungen, um den geänderten Zustand der durch das zweite Gerät angebotenen Bedienung widerzuspiegeln.

2. Verfahren nach Anspruch 1, wobei die zusätzliche Benutzereingabe eine Wischgeste nach vorn ist.

3. Verfahren nach Anspruch 1, des Weiteren umfassend:
Auswählen einer vorhergehenden Darstellung in der Reihenfolge, wobei die vorhergehende Darstellung dem ersten Gerät der Vielzahl von im physikalischen Raum vorhandenen Geräten entspricht, wobei das Auswählen der vorhergehenden Darstellung als Reaktion auf eine noch weitere zusätzliche Benutzereingabe stattfindet;
Aktualisieren der Angabe der ausgewählten Darstellung, um die Darstellung des ersten Gerätes noch einmal anzuzeigen;
Empfangen einer noch weiteren Benutzereingabe im bezeichneten Steuerungsbereich (360), die eine noch weitere Zustandsänderung anzeigt; und
als Reaktion auf die noch weitere Benutzereingabe im bezeichneten Steuerungsbereich (360),
Bewirken einer weiteren Änderung an dem Zustand der durch das erste Gerät angebotenen Bedienung, und
dynamisches Aktualisieren eines Erscheinungsbildes des virtuellen Raums (310) zum Ändern eines Erscheinungsbildes der Darstellung des ersten Gerätes, eines Erscheinungsbildes der Darstellungen von Begrenzungen und eines Erscheinungsbildes der Darstellungen von Einrichtungen, um den geänderten Zustand der durch das erste Gerät angebotenen Bedienung widerzuspiegeln.

4. Verfahren nach Anspruch 3, wobei die noch weitere zusätzliche Benutzereingabe eine Wischgeste nach hinten ist.

5. Verfahren nach Anspruch 1, wobei das erste Gerät eine Beleuchtungseinrichtung ist, die durch das erste Gerät angebotene Bedienung ein Beleuchtungsservice ist, und der geänderte Zustand der Bedienung eine Änderung einer Beleuchtungsstärke ist.

6. Verfahren nach Anspruch 1, wobei das erste Gerät ein Audio-/Video- (A/V) Gerät ist, die durch das erste Gerät angebotene Bedienung eine Sichtbedienung ist, und der geänderte Zustand der Bedienung eine Änderung einer Videoquelle, eines Kanals und/oder eines Lautstärkepegels ist.

7. Verfahren nach Anspruch 1, wobei die Darstellungen von Geräten, Darstellungen von Begrenzungen des physikalischen Raums und Darstellungen von im physikalischen Raum vorhandenen Einrichtungen jeweils fotorealistische Darstellungen sind.

8. Hausautomationssystem mit einer virtuellen raumbasierten Benutzeroberfläche zum Steuern einer Vielzahl von Geräten, umfassend:
ein elektronisches Gerät mit einer Berührungsbildschirmanzeige und ausgeführt, um eine Darstellung eines ersten Gerätes aus einer Reihenfolge von Gerätedarstellungen auszuwählen, wobei die Gerätedarstellungen jeweils einem entsprechenden Gerät der Vielzahl von in einem physikalischen Raum vorhandenen Geräten entspricht, die Bedienungen anbieten, wobei die Auswahl der Darstellung des ersten Gerätes eine Standardauswahl ist, und auf der Berührungsbildschirmanzeige einen virtuellen Raum (310) darzustellen, der dem physikalischen Raum entspricht, der die Darstellungen jedes der Vielzahl von Geräten, Begrenzungsdarstellungen des physikalischen Raums und Darstellungen von im physikalischen Raum vorhandenen Einrichtungen enthält, und eine Benutzereingabe in einem bezeichneten Steuerungsbereich (360) auf der Berührungsbildschirmanzeige getrennt von der ausgewählten Darstellung des ersten Gerätes zu empfangen; und
eine Steuerung im Informationsaustausch mit dem elektronischen Gerät und betriebsfähig, um Geräte des Hausautomationssystems zu steuern, wobei die Steuerung ausgelegt ist, um als Reaktion auf die Benutzereingabe in dem bezeichneten Steuerungsbereich (360) einen Zustand einer durch das erste Gerät angebotenen Bedienung zu ändern,
wobei das elektronische Gerät des Weiteren ausgestaltet ist zum dynamischen Aktualisieren eines Erscheinungsbildes des virtuellen Raums (310), um ein Erscheinungsbild der ausgewählten Darstellung des ersten Gerätes, ein Erscheinungsbild der Begrenzungsdarstellungen und ein Erscheinungsbild der Darstellungen von Einrichtungen zu ändern, um den geänderten Zustand der durch das erste Gerät angebotenen Bedienung widerzuspiegeln,
wobei das elektronische Gerät außerdem ausgestaltet ist, um als Reaktion auf eine zusätzliche Benutzereingabe eine nachfolgende Darstellung in der Reihenfolge auszuwählen, die nachfolgende Darstellung einem zweiten Gerät der Vielzahl von Geräten entspricht, und um in dem bezeichneten Steuerungsbereich (360) eine weitere Benutzereingabe zu empfangen, die eine weitere Zustandsänderung anzeigt,
wobei die Steuerung des Weiteren ausgelegt ist, um als Reaktion auf die weitere Benutzereingabe im bezeichneten Steuerungsbereich (360) einen Zustand einer durch das zweite Gerät angebotenen Bedienung zu ändern, und
wobei das elektronische Gerät ferner ausgestaltet ist zum dynamischen Aktualisieren eines Erscheinungsbildes des virtuellen Raums (310), um ein Erscheinungsbild der Darstellung des zweiten Gerätes, ein Erscheinungsbild der Begrenzungsdarstellungen und ein Erscheinungsbild der Darstellungen von Einrichtungen zu ändern, um den geänderten Zustand der durch das zweite Gerät angebotenen Bedienung widerzuspiegeln.

9. Hausautomationssystem nach Anspruch 8, wobei das erste Gerät eine Beleuchtungseinrichtung ist, die durch das erste Gerät angebotene Bedienung ein Beleuchtungsservice ist, und der geänderte Zustand der Bedienung eine Änderung einer Beleuchtungsstärke ist.

10. Hausautomationssystem nach Anspruch 8, wobei das erste Gerät ein Audio-/Video- (A/V) Gerät ist, die durch das erste Gerät angebotene Bedienung eine Sichtbedienung ist, und der geänderte Zustand der Bedienung eine Änderung einer Videoquelle, eines Kanals und/oder eines Lautstärkepegels ist.

## Revendications

1. Procédé pour fournir une interface utilisateur basée sur un local virtuel afin de contrôler une pluralité de dispositifs dans un système domotique, consistant à :
sélectionner une représentation d'un premier dispositif dans une séquence de représentations de dispositifs, les représentations de dispositifs correspondant chacune à un dispositif respectif de la pluralité de dispositifs présents dans un local physique et fournissant des services, la sélection de la représentation du premier dispositif étant une sélection par défaut ;
afficher, sur un écran tactile d'une télécommande (140), d'un appareil mobile (160) ou d'une unité dédiée d'écran tactile (165),
un local virtuel (310) correspondant au local physique et comprenant les représentations de chacun de la pluralité de dispositifs,
les représentations des limites du local physique et les représentations de l'ameublement présent dans le local physique,
une indication de la représentation sélectionnée du premier dispositif ; une zone de contrôle désignée (360), distincte de la représentation sélectionnée du premier dispositif ;
recevoir une entrée d'un utilisateur dans la zone de contrôle désignée (360), indiquant un changement d'état ;
en réponse à l'entrée de l'utilisateur dans la zone de contrôle désignée (360),
provoquer un changement d'état d'un service fourni par le premier dispositif, et
mettre à jour dynamiquement l'aspect du local virtuel (310) pour changer l'aspect de la représentation sélectionnée du premier dispositif, l'aspect des représentations des limites et l'aspect des représentations de l'ameublement, afin de reproduire l'état changé du service fourni par le premier dispositif ;
sélectionner une représentation successive dans la séquence, la représentation successive correspondant à un deuxième dispositif de la pluralité de dispositifs, la sélection de la représentation successive se faisant en réponse à une entrée supplémentaire de l'utilisateur ;
mettre à jour l'indication de la représentation sélectionnée pour indiquer la représentation du deuxième dispositif ;
recevoir une autre entrée de l'utilisateur dans la zone de contrôle désignée (360) indiquant un autre changement d'état ;
en réponse à l'autre entrée de l'utilisateur dans la zone de contrôle désignée (360),
provoquer un changement de l'état d'un service fourni par le deuxième dispositif, et
mettre à jour dynamiquement l'aspect du local virtuel (310) pour changer l'aspect de la représentation du deuxième dispositif, l'aspect des représentations des limites et l'aspect des représentations de l'ameublement, afin de reproduire l'état changé du service fourni par le deuxième dispositif.

2. Procédé selon la revendication 1,
dans lequel l'entrée supplémentaire de l'utilisateur est un geste de balayage vers l'avant.

3. Procédé selon la revendication 1, consistant en outre à :
sélectionner une représentation précédente dans la séquence, la représentation précédente correspondant au premier dispositif de la pluralité de dispositifs présents dans le local physique, la sélection de la représentation précédente se faisant en réponse à une autre entrée supplémentaire de l'utilisateur ;
mettre à jour l'indication de la représentation sélectionnée pour indiquer à nouveau la représentation du premier dispositif ;
recevoir encore une autre entrée de l'utilisateur dans la zone de contrôle désignée (360), indiquant encore un autre changement d'état ; et
en réponse à ladite autre entrée de l'utilisateur dans la zone de contrôle désignée (360),
provoquer un autre changement de l'état du service fourni par le premier dispositif, et
mettre à jour dynamiquement l'aspect du local virtuel (310) pour changer l'aspect de la représentation du premier dispositif, l'aspect des représentations des limites et l'aspect des représentations de l'ameublement, afin de reproduire l'état changé du service fourni par le premier dispositif.

4. Procédé selon la revendication 3,
dans lequel l'autre entrée supplémentaire de l'utilisateur est un geste de balayage vers l'arrière.

5. Procédé selon la revendication 1,
dans lequel le premier dispositif est un dispositif d'éclairage, le service fourni par le premier dispositif est un service d'éclairage, et l'état changé du service est un changement de niveau d'illumination.

6. Procédé selon la revendication 1,
dans lequel le premier dispositif est un dispositif audio/vidéo (A/V), le service fourni par le premier dispositif est un service de visualisation, et l'état changé du service est un changement d'au moins une source vidéo, d'un canal ou d'un niveau de volume.

7. Procédé selon la revendication 1,
dans lequel les représentations des dispositifs, les représentations des limites du local physique et les représentations de l'ameublement présent dans le local physique sont toutes des représentations photoréalistes.

8. Système domotique comprenant une interface utilisateur basée sur un local virtuel pour contrôler une pluralité de dispositifs, comprenant :
un dispositif électronique présentant un écran tactile et configuré pour sélectionner une représentation d'un premier dispositif dans une séquence de représentations de dispositifs, les représentations de dispositifs correspondant chacune à un dispositif respectif de la pluralité de dispositifs présents dans un local physique et fournissant des services, la sélection de la représentation du premier dispositif étant une sélection par défaut, et pour afficher sur l'écran tactile un local virtuel (310) correspondant au local physique et comprenant les représentations de chacun de la pluralité de dispositifs, les représentations des limites du local physique et les représentations de l'ameublement présent dans le local physique, et pour recevoir une entrée d'un utilisateur dans une zone de contrôle désignée (360) sur l'écran tactile, distincte de la représentation sélectionnée du premier dispositif ; et
un contrôleur en communication avec le dispositif électronique et apte à contrôler les dispositifs du système domotique, le contrôleur étant configuré pour, en réponse à l'entrée de l'utilisateur dans la zone de contrôle désignée (360), changer un état d'un service fourni par le premier dispositif,
dans lequel
le dispositif électronique est en outre configuré pour mettre à jour dynamiquement l'aspect du local virtuel (310) afin de changer l'aspect de la représentation sélectionnée du premier dispositif, l'aspect des représentations des limites et l'aspect des représentations de l'ameublement, afin de reproduire l'état changé du service fourni par le premier dispositif,
le dispositif électronique est en outre configuré pour sélectionner une représentation successive dans la séquence en réponse à une entrée supplémentaire de l'utilisateur, la représentation successive correspondant à un deuxième dispositif de la pluralité de dispositifs, et pour recevoir une autre entrée de l'utilisateur dans la zone de contrôle désignée (360), indiquant un autre changement d'état,
le contrôleur est en outre configuré pour, en réponse à l'autre entrée de l'utilisateur dans la zone de contrôle désignée (360), changer un état d'un service fourni par le deuxième dispositif, et
le dispositif électronique est en outre configuré pour mettre à jour dynamiquement l'aspect du local virtuel (310) afin de changer l'aspect de la représentation du deuxième dispositif, l'aspect des représentations des limites et l'aspect des représentations de l'ameublement, afin de reproduire l'état changé du service fourni par le deuxième dispositif.

9. Système domotique selon la revendication 8,
dans lequel le premier dispositif est un dispositif d'éclairage, le service fourni par le premier dispositif est un service d'éclairage, et l'état changé du service est un changement de niveau d'illumination.

10. Système domotique selon la revendication 8,
dans lequel le premier dispositif est un dispositif audio/vidéo (A/V), le service fourni par le premier dispositif est un service de visualisation, et l'état changé du service est un changement d'au moins une source vidéo, d'un canal ou d'un niveau de volume.
